# EUROPEAN PATENT SPECIFICATION

(11) **EP 3 157 841 B1**
(45) Date of publication and mention of the grant of the patent: **08.04.2020**
(21) Application number: 15716844.4
(22) Date of filing: 22.04.2015
(51) Int. Cl.: B65D 75/58, B31B 70/84, B31B 160/10

(54) **PACKAGING CONTAINER WITH OPENING DEVICE AND METHOD OF MANUFACTURING A PACKAGING CONTAINER HAVING SUCH OPENING DEVICE**
VERPACKUNGBEHÄLTER MIT ÖFFNUNGSVORRICHTUNG UND VERFAHREN ZUR HERSTELLUNG EINES VERPACKUNGSBEHÄLTERS MIT DERARTIGER ÖFFNUNGSVORRICHTUNG
CONTENANT D'EMPALLAGE AVEC UN DISPOSITIF D'OUVERTURE ET PROCÉDÉ DE FABRICATION D'UN CONTENANT D'EMBALLAGE PRÉSENTANT UN DISPOSITIF D'OUVERTURE

(30) Priority: 19.06.2014 SE 1450773; 19.06.2014 SE 1450774
(43) Date of publication of application: 26.04.2017
(73) Proprietor: Tetra Laval Holdings & Finance S.A., 1009 Pully (CH)
(72) Inventor: RYDBERG, Pär, S-247 98 Genarp (SE); HÅKANSSON, Bengt, S-275 95 Sjöbo (SE); ANDERSSON, Pär, S-227 38 Lund (SE); JOHANSSON, Göran, S-241 75 Stehag (SE); BEGIC, Olivia, S-245 61 Staffanstorp (SE); PERSSON, Jens, S-218 46 Bunkeflostrand (SE)
(74) Representative: Tetra Pak - Patent Attorneys SE
(86) International application number: PCT/EP2015/058621
(87) International publication number: WO 2015/193000

(56) References cited:
- EP-A1- 1 508 530
- EP-A1- 2 325 099
- DE-A1- 2 609 520
- US-A- 5 552 202
- US-A1- 2008 285 896
- US-E- R E33 674

## Description

### TECHNICAL FIELD

Described herein are an opening device, a method of manufacturing an opening device and a packaging container for liquid or semi-liquid food, said packaging container having an opening device.

### BACKGROUND OF THE INVENTION

Packaging containers of the single use disposable type for liquid foods are often produced from a packaging material based on paperboard or carton. One such commonly occurring packaging container is marketed under the trademark Tetra Fino ® Aseptic and is principally employed for aseptic packaging of liquid foods such as milk, fruit juices etc, marketed and sold for long term ambient storage. The packaging material in this known packaging container is typically a laminate comprising a bulk layer of paper or paperboard and outer, liquid-tight layers of thermoplastics. In order to render the packaging container gas-tight, in particular oxygen gas-tight, for example for the purpose of aseptic packaging such as packaging of milk or fruit juice, the laminate in these packaging containers normally comprises at least one additional such gas barrier layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat-sealable adhesive polymers and/or heat-sealable polyolefins. Also on the outside of the paper or paperboard bulk layer, there is an outermost heat-sealable polymer layer (decor layer). The heat-sealable polymer layers are often based on low density polyethylene or blends thereof.

The packaging containers are generally produced by means of modern, high-speed packaging machines of the type that continuously form, fill and seal packages from a web or from prefabricated blanks of packaging material, e.g. Tetra Fino ® Aseptic- type packaging machines. Packaging containers may thus be produced by the so-called form-fill-seal technology basically including continuous reforming a web of the laminated packaging material by means of a filling machine which forms, fills and seals the web into packages. More specifically, a continuous tube is formed from the web-fed packaging material; the web of packaging material is sterilized by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is formed into a vertical tube by sealing the longitudinal edges of the tube in an overlapping seal. The tube is filled with the food product, and is sealed and subsequently cut along equally spaced transverse seal zones to form cushion-shaped or pillow-shaped packing containers.

An aspect of the Tetra Fino® -type packaging method is, as stated above, the possibility of continuous high-speed packaging, which has considerable impact on cost efficiency. Typically many thousands of packages may be prepared per hour. For example the Tetra Pak ® A1 may manufacture about 10 000 packaging containers per hour (packaging containers of 0,5 litres or more), and about 15 000 packaging containers per hour (portion packages)

The Tetra Fino ® Aseptic packaging containers are, as mentioned above, cushion-shaped or pillow shaped and commonly such packaging containers have an opening device that is generally provided in the form of a straw hole, or simply as a cut indicator, which is facilitated by a rather thin and thus tearable packaging material being used. Using conventional opening devices such as for example those comprising screw caps or pull-tabs would in most cases be fully functional. However, the type of packaging container is a high-volume (in terms of packaging containers per time unit) and low-cost packaging container (due to the properties of the packaging material), and such opening devices might hamper the production speed and be detrimental for the cost of the packaging container. From DE 2 609 520 it is known to provide adhesive tapes slightly spaced on both sides of an opening line of a container. For this reason there is a need for an opening device having a high efficiency in regard of the amount of material used and the time needed for production of each opening device. It should be emphasized that even if the present invention was developed to solve a specific problem, the outcome may be applied to packages in a general sense and it should not be limited to a particular type of packages in this respect.

### OBJECTS OF THE INVENTION

At least the above described need is solved by the present invention. An opening device according to the invention is defined in claim 1. The dependent claims 2-8 mention advantageous modifications.

A method of manufacturing an opening device according to claim 1 is defined in claim 9. Advantageous modifications are mentioned in dependent claims 10 and 11.

### BRIEF DESCRIPTION OF THE DRAWINGS

Further advantages and favorable features will be apparent from the following detailed description. Equal or corresponding elements are denominated by the same reference numbers in all figures. The features described in connection with the different embodiments can be combined as far as technically possible. The embodiments will be described with reference to the appended figures, in which:
Fig. 1 is a schematic view of a first embodiment of an opening device according to the invention,
Fig. 2 is a schematic view of a portion of a packaging container provided with the opening device of Fig. 1.
Fig. 3 is a schematic view of a second embodiment of the opening device according to the invention.
Fig. 4 is a schematic view of a third embodiment of the opening device according to the invention.
Fig. 5 is a schematic view of a fourth embodiment of the opening device according to the invention.
Fig. 6 is a schematic view of a fifth embodiment of the opening device according to the invention.
Fig. 7 is a schematic section through line A-A in Fig. 6.
Fig. 8 is a schematic view of a packaging container provided with an opening device.
Fig. 9 is a schematic view of the hands of a consumer opening the packaging container of Fig. 8.
Fig. 10 is a schematic top view of a sixth embodiment of the opening device according to the invention.
Fig. 11 is a schematic view from the side of the sixth embodiment.
Fig. 12 is a schematic view of a portion of a packaging container provided with the opening device according to the sixth embodiment.
Fig. 13 is a schematic view of a portion of a packaging container provided with the opening device according to the sixth embodiment, in which the opening device is shown in an opened state.
Fig. 14 is a schematic planar view of a seventh embodiment of an opening device according to the invention.
Fig. 15 is a schematic view of a portion of a packaging container provided with the opening device according to the seventh embodiment.
Fig. 16a is a schematic view similar to Fig. 15 but in which the opening device is shown in an opened state.
Fig. 16b is a schematic view similar to Fig. 16a, but in which the packaging container is shown in a semi-reclosed state.
Fig. 16c is a schematic view similar to Fig. 16b, but in the packaging container is shown in a fully reclosed state.

### DETAILED DESCRIPTION OF EMBODIMENTS

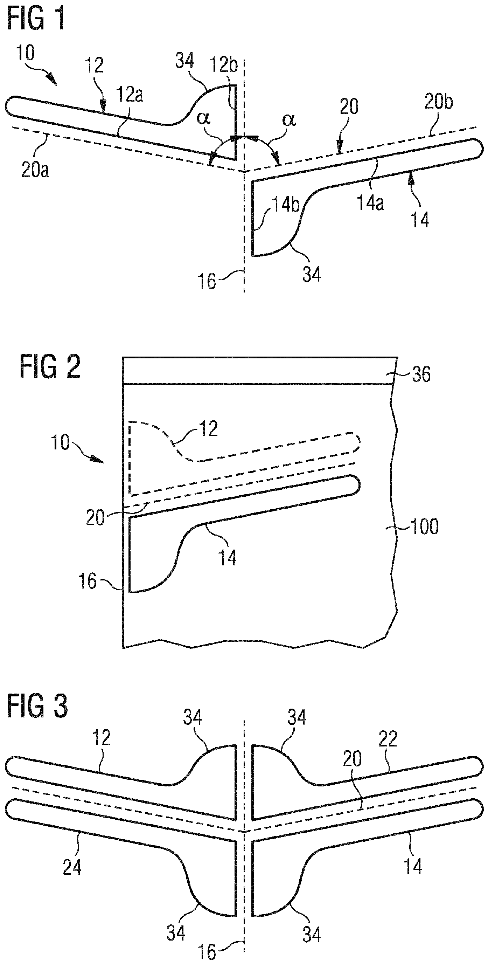

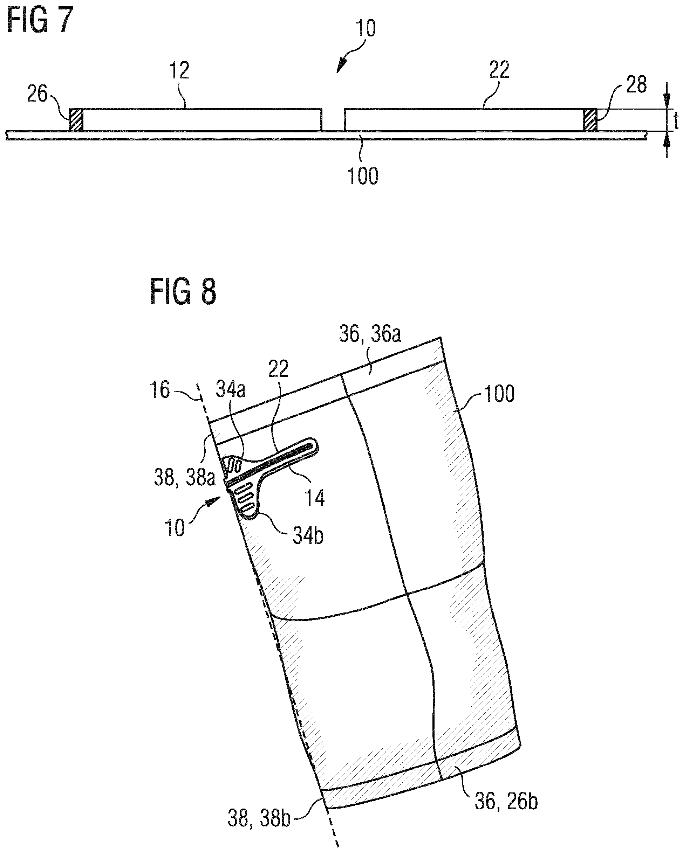

Fig. 1 shows a first embodiment of an opening device of the invention. The opening device is denoted 10 and comprises a first opening device portion 12 and a second opening device portion 14. The opening device portions 12, 14 will be described with reference to a first fold line 16 and an opening line 20 of a packaging container, which lines will be further described later in relation to Fig. 8. The first fold line 16 and the opening line 20 intersect in an intersection point, and said intersection point divides the opening line 20 into a first opening line portion 20a and a second opening line portion 20b.

The first opening device portion 12 is arranged on a first, left side of the first fold line 16. Further is arranged on a first, upper side of the opening line 20. The second opening device portion 14 is arranged on a second, right side of the first fold line 16. Further it is arranged on a second, lower side of the opening line 20.

The first opening device portion 12 is elongate and has an opening edge 12a that extends along the first opening line portion 20a. The opening edge 12a is straight and substantially parallel to the first opening line portion 20a, i.e. the opening edge 12a is aligned along the first opening line portion 20a.

Correspondingly, the second opening device portion 14 is also elongate and has an opening edge 14a that extends along the second opening line portion 20b. The opening edge 14a is also straight, and is parallel to the second opening line portion 20b, i.e. it is aligned along the second opening line portion 20b.

The opening line 20 is an imaginary line along which the opening device will be opened, i.e. along which the packaging material of the packaging container will be ruptured or torn. The first fold line 16 is a longitudinal imaginary line along which the opening device can be folded during opening.

In this first embodiment the first opening line portion 20a is angled an angle α in relation to the first fold line 16. Similarly, the second opening line portion 20b is angled an angle α in relation to the first fold line 16. The angle may be in the range 20-90°, particularly 45-90°. Together the first and second opening line portions 20a, 20b together form an obtuse V-shape.

In the first embodiment the first opening device portion 12 is further comprising a fold edge 12b. The fold edge 12b is aligned along the first fold line 16, i.e. it is parallel to the first fold line 16. Correspondingly, the second opening device portion 14 comprises a fold edge 14b. That fold edge 14b is also aligned with the first fold line 16, i.e. is parallel to the first fold line 16.

As can be seen from Fig. 1 the first and second opening device portions 12, 14 correspond to each other and are almost point reflections of each other. The second opening device portion 14 has a shape and position, in relation to the first opening device portion 12, which corresponds to that of the first opening device portion 12 rotated clockwise around the intersection point an angle of 2α.

Further, the fold edges 12b, 14b of the first and second opening device portions 12, 14 are each arranged at a first distance from the first fold line 16. The distance is in the range of 1-2 mm.

The distance facilitates folding of the opening device 10 around the first fold line 16.

Furthermore, the opening edges 12a, 14a of the first and second opening device portions 12, 14 are each arranged at a second distance from the opening line 20. The distance is in the range of 0,2-1 mm.

The distance facilitates rupture of the packaging material along the opening line.

Fig. 2 shows the opening device 10 according to the first embodiment, but in a folded state. Folding has been made at the first fold line 16, i.e. along or around the first fold line 16. The opening device 10 is arranged on a packaging container 100 of which a portion is shown in the figure. The opening device is provided in an upper corner of the packaging container, as is best seen in Fig. 8, and close to an upper transverse seal zone 36. The first opening device portion 12 is positioned on a back face of the packaging container, and hence shown in hidden lines, whereas the second opening device portion 14 is positioned on a front face of the packaging container. As can be further seen in the figure is that the first opening line portion 20a coincides with the second opening line portion 20b. As the opening edges of the first and second opening device portions are distanced from the opening line, an opening slot is formed in between the opening edges.

The first and second opening device portions 12, 14 are provided with tab sections 34 providing an area where a consumer can grab the opening device with his or her fingers. The tab sections 34 may be provided with a tactile pattern in order to facilitate gripping. The tab sections 34 in this first embodiment have a convex shape.

Fig. 3 shows a second embodiment of the opening device 10 according to the invention. The opening device has first and second opening device portions 12, 14 similar to the first and second opening device portions of the first embodiment. The difference is that this second embodiment comprises further opening device portions, namely a third opening device portion 22 and a fourth opening device portion 24. The third opening device portion 22 is provided on the second side of the first fold line 16, and is a mirror of the first opening device portion 12 around the first fold line 16. The fourth opening device portion 24 is provided on the first side of the first fold line 16, and is a mirror of the second opening device portion 14 around the first fold line 16. The third and fourth opening device portions 22, 24 are, similar to the first and second opening device portions 12, 14, arranged at a first distance from the first fold line 16, to allow the opening device 10 to be folded at the first fold line 16. Furthermore, similar to the first and second opening device portions 12, 14, the third and fourth opening device portions 22, 24 are arranged at a second distance from the opening line 20. The first and fourth opening device portions 12, 24 will, together with the second and third opening device portions 14, 22, form the opening slot.

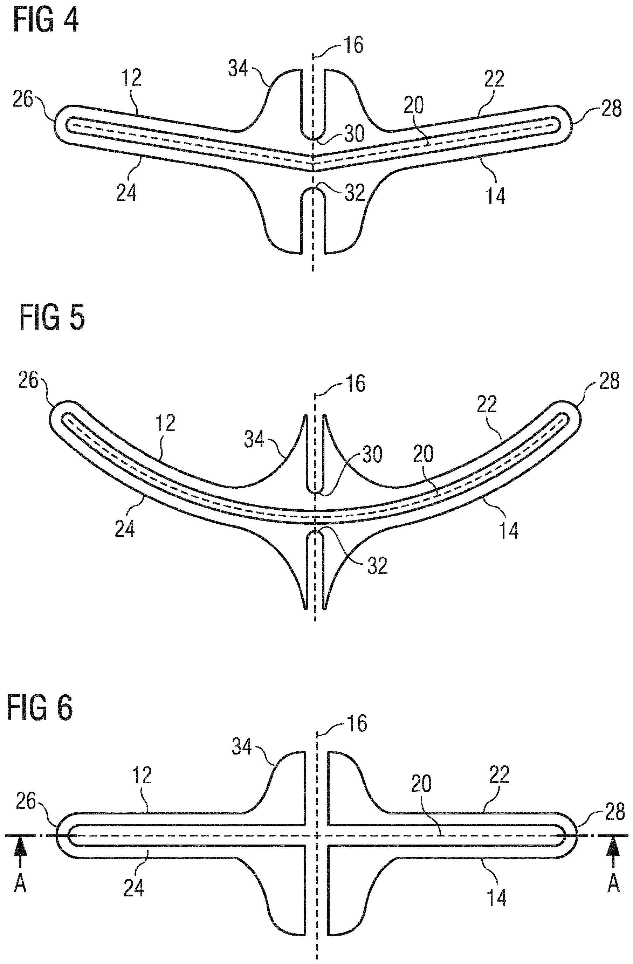

Fig. 4. shows a third embodiment essentially similar to the second embodiment in that it comprises similar first, second, third and fourth opening device portions 12, 14, 22, 24. The difference is that the first and fourth opening device portions 12, 24 are connected to each other by a first bridge 26. The first bridge 26 delimits one of the ends of the opening slot. The bridge 26 is rounded. Similarly, the second and third opening device portions 14, 22 are connected to each other by a second bridge 28. The second bridge 28 delimits the other end of the opening slot and this bridge 28 is also rounded. Further, the first and third opening device portions 12, 22 are connected to each other by a third bridge 30. Similarly, the second and fourth opening device portions 14, 24 are connected to each other by a fourth bridge 32. The third and fourth bridges 30, 32 are arranged to form hinge areas when the opening device 10 is folded along the first fold line 16. The third and fourth bridges 30, 32 are separated from each other by the opening slot. In this embodiment the first, second, third and forth opening device portions together with the first, second, third and fourth bridges form a closed frame delimiting the opening slot. This embodiment may be altered slightly from what is shown, for ease of manufacture, in that the opening slot is covered with a film or skin of plastic material. The thickness of the skin or film is considerably less than the thickness of the rest of opening device such that the function of the opening edges 12a, 14a is kept and that the opening device is still easily foldable around the first fold line 16. The skin or film may have an uneven thickness, starting from being very, very thin at the intersection point and gradually becoming thicker in the direction towards the first and second bridges 26, 28. Alternatively, the intersection point and potentially also the area of the opening slot being in the vicinity of the intersection point is without skin or film, and that the skin or film starts covering the opening slot at a distance from the intersection point, to facilitate initial rupture of the packaging material. By means of the skin or film the plastic melt will more easily and more evenly be distributed in the mould cavity. The distribution will otherwise potentially be a problem because of the long and thin cavity portions, at least if using only one or few injection points.

Fig. 5 shows a fourth embodiment quite similar to the third one. The difference compared to the third embodiment is the design of the tab sections 34. In this fourth embodiment the tab sections have a concave shape and their surfaces are thus smaller compared to surfaces of the tab sections 34 in the third embodiment. Another difference is the shape of the opening line and thus also the shape of the opening slot and the opening edges of the opening device portions. The opening line is curved or arc-shaped. The opening edges of the opening device portions follow the curvature or the arc-shape. The curvature or arc-shape of the second opening device portion is a mirror, around the first fold line 16, of the curvature or arc-shape of the first opening device portion. Hence, if folding the opening device the first and second opening line portions 20a, 20b will coincide with each other.

A further difference compared to the second embodiment is that the first distance is shorter, i.e. the distance from the first fold line 16 to the fold edges of the first, second, third and fourth opening device portions. This fourth embodiment may as well be furnished with the skin or film described in relation to the third embodiment.

Fig. 6 shows a fifth embodiment essentially similar to the second embodiment in that it comprises similar first, second, third and fourth opening device portions 12, 14, 22, 24. In this embodiment the opening line 20 is a straight line perpendicularly intersecting the first fold line 16. Further, the embodiment is only provided with first and second bridges 26, 28, not third and fourth bridges. Fig. 7 shows the same embodiment, but in a view corresponding to section A-A taken from Fig. 6. As can be seen the opening device is only provided on an outer side of the packaging material. This fifth embodiment may as well be furnished with the skin or film described in relation to the third embodiment.

Preferably, the opening device 10 is injection-moulded or glued onto the packaging material, preferably to what will become the outside surface of a packaging container. The material thickness *t* of the opening device, in a direction perpendicular to the packaging material surface, is in the range of approximately 0,2 -2 mm. However, the thickness may be made larger than 2 mm, but the opening device would then require more material, thereby increasing cost. The corresponding packaging material thickness used for this type of opening device is today in the range of approximately 0,2 - 1,5 mm. However, the opening device may be provided on thinner as well as thicker packaging materials.

Fig. 8 shows a packaging container 100 provided with an opening device 10. The opening device shown is of a type according to a fifth embodiment. The fifth embodiment is essentially similar to the fourth embodiment, but has different tab sections 34. In this fifth embodiment upper tab sections 34a of the first and third opening device portions 12, 22 are smaller in size than lower tab sections 34b of the second and fourth opening device portions 14, 24. As can be seen from the figure the upper tab sections 34a have different tactile pattern than the lower tab sections 34b.

The packaging container 100 is made of a longitudinal tube of packaging material which has been sealed off in the ends by first and second transverse seal zones 36 to form a cushion-shape. In the seal zones inner heat sealable layers of the packaging material have been sealed together to form a tight seal. As the packaging containers are of the pouch type it does not have any defined longitudinal edges. However, at outermost edges 38 of the transverse seal zones 36 the packaging material is folded, since the transverse seal is made transverse to a tube. The first fold line 16 previously referred to is an imaginary line extending longitudinally from an upper outermost edge 38a of a first transverse seal zone 36a to a corresponding, lower outermost edge 38b of a second transverse seal zone 36b. The first fold line 16 extends the shortest possible distance between the edges 38a, 38b.

The packaging container 100 is filled with a liquid or semi-liquid food product. The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, tea drinks, wine, soups, jalapenos, tomatoes, sauce (such as pasta sauce), beans and olive oil are some example of food products contemplated.

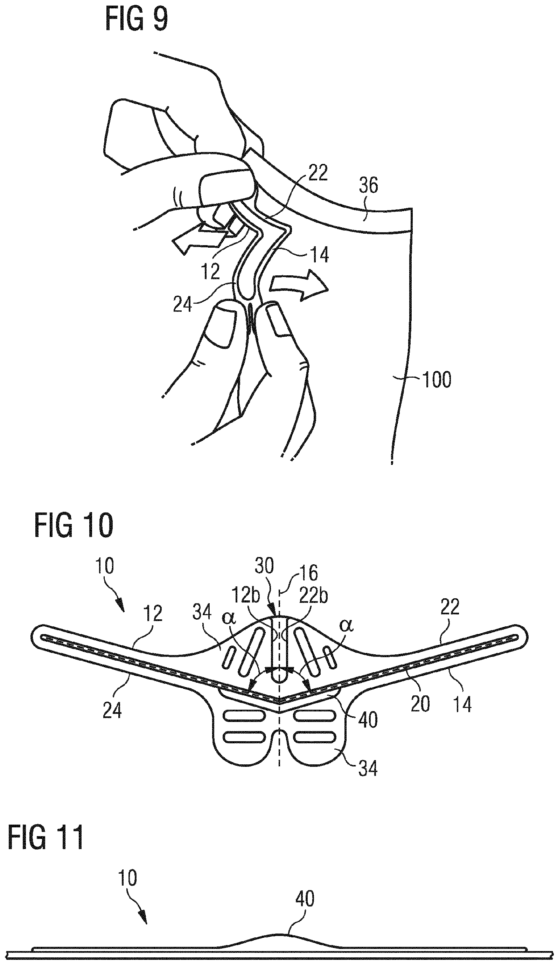

With reference to Fig. 9 it will in the following be described how the opening device of the present invention can be used for opening the packaging container. The opening device embodiment referred to is the one shown in Fig. 8, but it is to be understood that the opening technique is basically similar for the various embodiments.

Upon opening a consumer will typically grip around the upper tab sections 34a with the index finger and the thumb of one hand and similarly grip around the lower tab sections 34b with the other hand. By doing so the consumer can fold the opening device 10 at the first fold line 16. By further forcing the upper tab sections away from the lower tab sections, in the directions shown by the arrows, the opening edges of the first and third opening device portions will act against the opening edges of the second and fourth opening device portions in order to initially break the packaging material in the intersection point, and then facilitate rupturing the packaging material along the opening line 20. The edges will act as scissors blades.

To further facilitating the rupture along the opening line 20 it may be considered to provide the opening line as a weakening line, such as for example a line at which one or more of the packaging material layers have been perforated or in other way been weakened.

Fig. 10 shows a sixth embodiment of the opening device 10 of the invention. This embodiment is substantially similar to the Fig. 4 embodiment, and only the features differing from the Fig. 4 embodiment will be described. The third bridge 30 is larger and is bridging the entire space between the fold edge 12b of the first opening device portion 12 and a fold edge 22b of the third opening device portion 22. However, an upper section of the bridge, farthest away from the opening line 12, is made with a thinner material thickness.

Further, the second and fourth opening device portions 14, 24, i.e. the lowermost opening device portions, and the fourth bridge 32 are provided with a pouring lip 40, i.e. an element protruding from the opening device and the packaging container along a central portion of the opening line 20. The pouring lip extends from the first fold line 16 and along each of the first and second opening line portions 20a, 20b. The pouring lip 40 extends a distance, on each side of the first fold line 16, substantially corresponding to a substantial portion of the width of the tab sections 34. In Fig. 11 the opening device 10 is shown from the side on a packaging material, and it can be seen that the pouring lip 40 is protruding from the rest of the opening device 10.

Going back to Fig. 10 again it is shown that the tab sections 34 of the first, second, third and fourth opening device portions 12, 14, 22 and 24 are provided with a relief or recess pattern for improved gripping. Preferably, the pattern is a recess pattern rather than a relief pattern, meaning that the tab portions 34 have recesses in which the material thickness is less than the material thickness of the rest of the tab portion 34, in order to use as little polymer material as possible. Further, the lower tab portions, i.e. the tab portions of the second and fourth opening device portions 14, 24 have a more rounded shape than in the embodiment of Fig. 4.

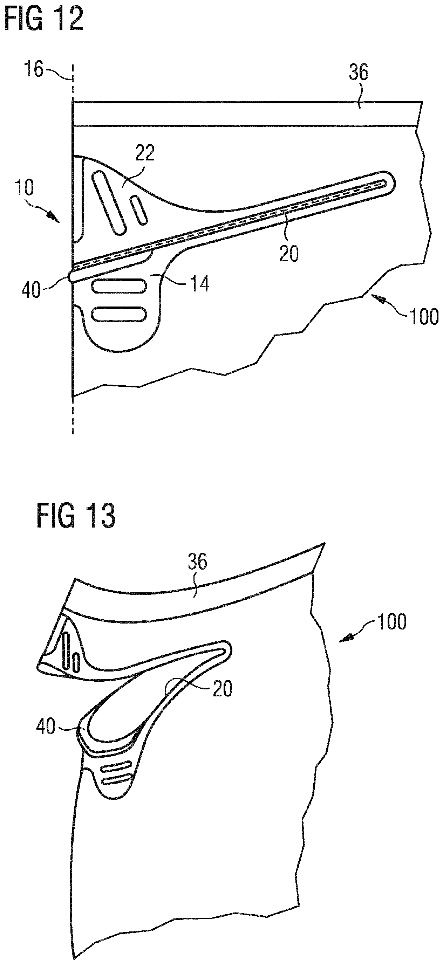

Fig. 12 shows the sixth embodiment in a view corresponding to that of Fig. 2, i.e. on a packaging container 100 and folded along the first fold line 16. Also in this figure it is shown that the pouring lip 40 protrudes from the packaging container 100 and the rest of the opening device 10. Fig. 13 shows the sixth embodiment after opening. The pouring lip 40 helps separating the front side of the packaging container from the back side and forming the opening. Even if the tab portions 34 of the second and fourth opening device portions 14, 24 have been squeezed together during opening, the stiffness of the polymer material in the pouring lip 40 will to some extent spring back and thereby facilitate the formation of an opening with good pouring characteristics. The pouring lip 40 will help the opening form a rounded shape at the intersection between the opening line 20 and the first fold line 16.

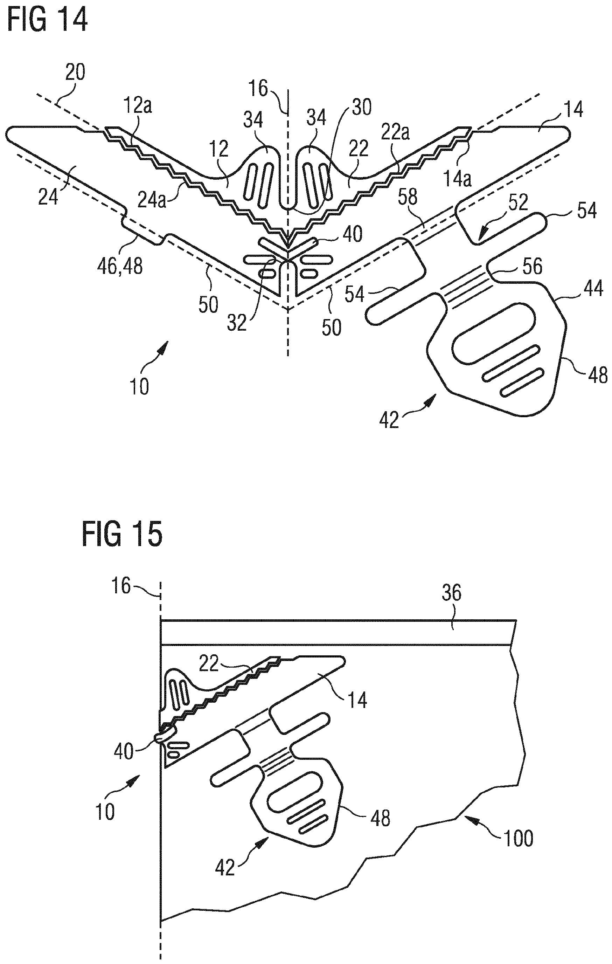

Fig. 14 shows a seventh embodiment of the invention. The opening device is quite similar to the opening device according to the sixth embodiment, and only the differences will be explicitly described. Opening edges 12a and 24a have a mutual toothed or serrated shape, and similarly opening edges 14a and 22a also have a mutual toothed or serrated shape. This is to facilitate opening. Further, similar to the sixth embodiment the opening device has a pouring lip 40 and third and fourth bridges 30, 32. However, the embodiment is not provided with any first and second bridges 26, 28. The first and third opening device portions 12, 22 are provided with tab section 34. The opening device comprises a closure device 42 for re-closing the packaging container 100 after opening along the opening line 20. The closure device 42 comprises a first closure device part 44 and a second closure device part 46. The first closure device part 44 forms part of the second opening device portion 14, and the second closure device part 46 forms part of the fourth opening device portion 24. Said parts 44, 46 are formed as integral parts of the opening device, i.e. made in one piece with. As can be seen in the figure the said first and second closure device parts 44, 46 are provided on different sides of the first fold line 16 such that they will be arranged on opposite faces of the packaging container 100. Further, they are arranged on the same distance from the first fold line 16. The first and second closure device parts 44, 46 are provided with mutual lockable members 48. One of the lockable members, in this case the one on the first closure device part 44, is formed as a loop and the other, in this case the one on the second closure device part 46, is formed as a protrusion, or a tongue, adapted to be inserted into the loop for locking the first and the second lockable members together. The lockable members 48 can be any of a large variety of types, for example the locking function can be mechanical such as for example as a snap lock, or snap fit, solution, either in points or along a line, the latter being similar to a conventional zip lock. Further, it can be chemical or a combination of mechanical and chemical such for example a locking function based on surface friction or surface adherence between the outwards facing surfaces of the first closure device part 44 and the second closure device part 46. In this embodiment the lockable members are shaped for mechanical locking. The tongue is insertable in the loop and will stay there until released.

Although the opening device is attached to the packaging material of the packaging container it is advantageous if the tongue and the loop is easily detachable from the packaging material such that the consumer can easily pull the loop over the tongue. If the opening device is moulded, which will be described later, onto the packaging material the mould may be cooled locally at the lockable members. Another alternative is that the packaging material is locally coated with a material that will cause less adhesion between the packaging material and the lockable members.

As can further be seen in Fig. 14 there is provided a line 50. This is a second fold line 50 which function will be described later. This second fold line 50 is parallel to the opening line 20, and it can be seen that the second and fourth opening device portions 14, 24 are provided in between the opening line 20 and the second fold line 50, on a first side of the second fold line 50. The lockable members 48 extend past the second fold line 50 to a second side of the second fold line 50. The second opening device portion 14 and the hook of the lockable members 48 are distanced from each other at least a distance corresponding to the distance between the opening line 20 and the second fold line 50, and the hook and the second opening device portion 14 are interconnected by an attachment portion 52 attached to the packaging container 100. The attachment portion 52 has flanges 54 and a hinge area 56 towards the hook. Another hinge area 58 is provided where the attachment portion 52 meets the second opening device portion 14.That hinge area 58 is aligned with the second fold line 50.

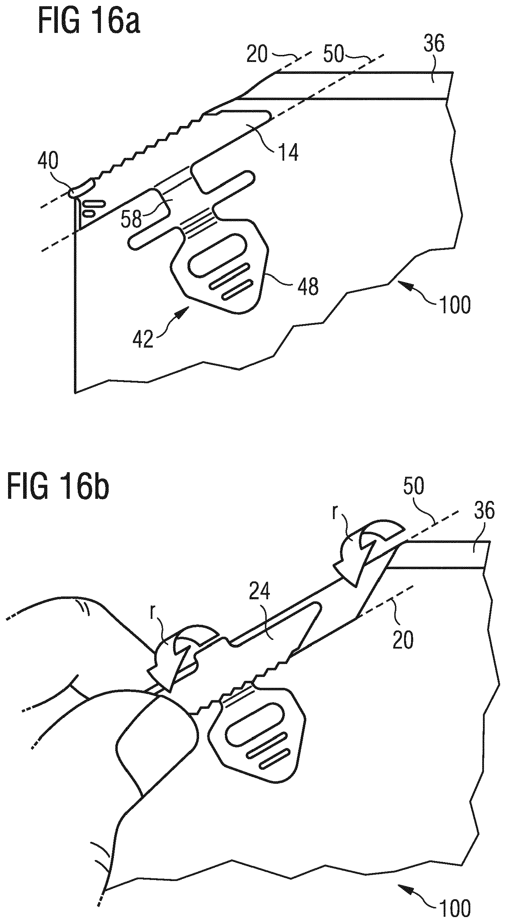

Fig. 15 shows the opening device of the seventh embodiment on a packaging container 100 (of which only a portion is shown in the figure). The opening device 10 is provided in an upper corner of the packaging container, as is best seen in Fig. 8, and close to an upper transverse seal zone 36. Since the opening device 10 is arranged round an edge of the packaging container folding of the opening device has been made at the first fold line 16, i.e. along or around the first fold line 16. The first opening device portion 12 is positioned on a back face (not visible) of the packaging container, whereas the second opening device portion 14 is positioned on a front face of the packaging container 100. The opening line 20 is angled with respect to the first fold line 16, and extends all the way towards the transverse seal zone 36. Hence, opening along the opening line 20 will open the packaging container 100 cross one of the upper corners thereof, and the corner piece may be removed. An opened state of the packaging container 100 is shown in Fig. 16a. As can be seen everything above the toothed edges of the second and fourth opening device portions 14, 24 have been removed, and the packaging container is ready to pour from.

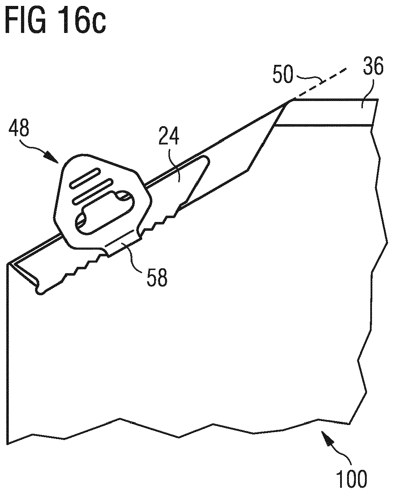

By means of the closure device 42 the packaging container is re-closable. A first step towards re-closure is to fold the remaining portions of the opening device 10, i.e. the second and fourth opening device portions 14, 24, over the second fold line 50 following arrows r. The second opening device portion 14 will then be hidden inside the fold whereas the fourth opening device portion 24 will be visible on the front face of the packaging container. A second, and final, step towards re-closure is to lock the lockable members 48, i.e. in this case force the hook over the tongue. As seen in the figure the tongue will be freely extending from fourth opening device and pointing upwards in the figure. The hook can be pulled, by means of the hinge area 56, upwards towards the tongue. The reclosed state is shown in Fig. 16c. The lockable members 48 have here been releasably locked to each other, and may released again as desired.

In the following manufacturing of the packaging container with the opening device will be described.

A first step of the method is to provide a packaging material. The packaging material generally comprises a bulk layer, which on a first side has a polymeric layer. The bulk layer can be a paper or paperboard layer. The bulk layer is arranged to provide for the greatest contribution to the flexural rigidity of the laminate. The paper or paperboard used herein has a typical grammage between 50-250 g/m², particularly between 60-220 g/m², depending on the requirement for different types of packaging containers. The grammage of the paperboard is assessed in accordance with ISO 536. Grammage expresses weight per unit area and is measured in g/m². The paper or paperboard normally has a thickness between 80-300 µm, particularly between 90-290 µm 80-660 µm, and is appropriately selected in order to obtain the desired stiffness suitable for the type of packaging container and the intended food product. The bulk layer thickness can be assessed by microscopy. It is however also conceivable that the bulk layer of the packaging material instead is a polyolefin bulk layer, made e.g. of polyethylene, polypropylene or copolymers of ethylene or propylene, such as, for example, ethylene-propylene, ethylene-butene, ethylene-hexene, ethylene-alkyl(meth)acrylate or ethylene-vinyl acetate copolymers, or PET (polyethylene terephthalate) bulk layer.

The polymeric layer is a décor layer which is to be the outer side of the filled and sealed packaging container. The side of the bulk layer, e.g. paper or paperboard, which is to be the outer side of the closed and sealed packaging container can contain a print covered by the decor layer. The decor layer is a heat-sealable polyolefin layer facing the surrounding environment of the resulting packaging container. Suitable polyolefins are polyethylene of the low density type, selected from the group consisting of LDPE, LLDPE, VLDPE, ULDPE or mLLDPE and blends of two or more thereof, optionally other polyolefins such as high density polyethylene (HDPE), polypropylene or propylene co- or ter-polymers are useful as the layer facing the surroundings. The decor layer provides additional protection and stability to the packaging container.

In addition, the packaging material comprises an innermost heat-sealable layer of a heat-sealable polyolefin polymer which is applied as a layer to be directed towards the inside of the packaging container, i.e. in direct food contact. The heat-sealable layer for the innermost layer may suitably be a polyethylene polymer of the low density type, selected from the group consisting of LDPE, LLDPE, VLDPE, ULDPE or mLLDPE and blends of two or more thereof. Depending on the type of packaging containers produced from the packaging material, also heat-sealable innermost layers of high density polyethylene, polypropylene or propylene co- or ter-polymers are conceivable.

Furthermore, the packaging material may comprise a barrier layer, such as an oxygen barrier, for instance aluminium foil, as well as suitable adhesion layers to increase adherence between the layers. The barrier layer is arranged by help of a laminate layer on the side opposite the bulk layer and has an adhesive on the side opposite the laminate layer. The adhesive depends on the type of bulk layer and the barrier layer and are within the capacity of those skilled in the art to select.

One exemplary packaging material comprises a decor layer which on one side of the layer has a paperboard layer, said paperboard layer, on the side opposite the decor layer has a laminate layer, said laminate layer, on the side opposite the paperboard layer has an oxygen barrier, said oxygen barrier, on the side opposite the laminate layer has an adhesive, and said adhesive, on the side opposite the oxygen barrier has a heat-sealable layer.

Laminated packaging materials are obtained by various methods for laminating layers together, such as extrusion lamination, dry adhesive lamination, heat-pressure lamination, and may also be including various coating methods. Although to achieve the benefits the particular lamination technique is not crucial it is considered to be of particular use in extrusion lamination to produce laminated packaging materials, in particular carton-based packages used for food such as liquid and semi-liquid food.

The term "heat-sealing" used above refers to the process of sealing of a thermoplastic material with another. Thus a heat-sealable material should be able to generate a seal when put in contact with another suitable thermoplastic material under the appropriate conditions such as when applying sufficient heating. Suitable heating can be achieved by induction heating or ultrasonic heating or other heating means.

A second step in the manufacturing method is that of moulding the opening device onto the first side of the packaging material. As described in relation to the various embodiments above said opening device comprises at least a first opening device portion 12 and a second opening device portion 14. The first opening device portion 12 is arranged on a first side of a fold line 16 of the packaging container, and the second opening device portion 14 is arranged on a second side of the fold line. The moulding step comprises the sub-steps of arranging, on the first side of the packaging material, a first mould portion comprising at least a first mould cavity, arranging a second mould portion on the other side of the packaging material, positioned opposite the first mould portion, injecting a plastic melt into the first mould cavity, and removing the first and the second mould portions. The material of the opening device is suitable for thermoplastic moulding, more specifically injection moulding, and may be polyethylene, polypropylene or another plastic suitable for injection moulding, for example polyethylene terephthalate. The first side of the packaging material is the side which will become the outer side of the packaging container, the first side having the décor layer. The heat of the melt will anchor or weld the opening device to the outer décor layer of the packaging material.

The first mould portion, or mould half has, as described above, at least one mould cavity. The first mould portion may comprise several cavities depending on the opening device. For instance, for the embodiment shown in Fig. 4 one mould cavity is enough, whereas for the embodiment in Fig. 1 two mould cavities are suitable, one per isolated opening device portion. For instance, the embodiment shown in Fig. 3 may require four mould cavities due to the four separate opening device portions. The second mould portion, or mould half, is preferably flat and will support the packaging material such that it is not ruptured by the moulding pressure. The mould portions are arranged in register on opposite sides of the packaging material, and a melt is injected in at least one position into the first mould cavity. If there are several mould cavities several injection points may be used. During the injection process the flow rate will be essentially constant and the amount of plastic being injected will correspond to the volume of the mould cavity. The optimum flow rate may vary with design of the opening device, properties of the packaging material, properties of the plastic used, etc. yet in a presently operational embodiment the cycle time is less than about 300 ms (milliseconds), i.e., about three opening devices per second may be manufactured by a single mould. Cycle times of 250-1000 ms are feasible, including indexing of the packaging material.

The dimensions of the opening device may be optimized to achieve an adequate opening of the packaging container only and any surplus use of material may be avoided. In this way only a relatively small amount of plastic is needed (compared to known opening devices). This has the beneficial effect that the time needed for injection is small, yet it also has the effect that the mould does not have to be closed for very long since the plastic will start to freeze (or solidify) immediately. The small amount of plastic vouches for that even if only a surface layer has started to freeze, this will be enough to retain the shape of the opening device until it has fully frozen, which in turn implies that the mould will be opened basically as soon as the injection is finalized. An outermost skin layer of the plastic melt will freeze as soon as it contacts the walls of a mould cavity, or the outermost layer of the packaging material. For non-complex designs this vouches for that the mould may be opened as soon as it is filled. For more complex designs, e.g. designs incorporating steep edges or distinct ridges more time may have to be allocated for the plastic to freeze, such that the plastic is allowed to solidify from the skin and inwards before opening the mould. In this context it should be understood that the plastic will shrink (from the outside and inwards) as it freezes, and in a conventional injection molding process it is known to continue to inject plastic during the freezing, such that the finished detail is a replica of the mould cavity. It may also be important to realize that the longer the mould remains closed, the more heat will be transferred from the melt to the mould. This results in a need for installing a cooling arrangement, such as channels for leading cooling fluid through the mould portions. For the present invention such arrangements may not be necessary due to the inherently low cycle times.

Though there is no drawing of a mould or mould cavity the skilled person realizes that the shape of the mould cavity will correlate to the shape of the manufactured opening device (or rather - vice versa), and since the present invention is not directed to the shaping of mould cavities this will not be described any further. Also, injection moulding is a well-established technique not the least for some of the suggested materials: PE, PP and PET. Therefore a disclosure of an injection moulding process or features thereof is not considered essential for the skilled person to apply the present invention, and it is therefore omitted.

After moulding the packaging material comprises the opening device and it is time to form the packaging material into packaging containers. The packaging material is formed into a tube by sealing overlapping longitudinal edges thereof. Either the packaging material is loaded into the filling machine as a continuous web which will be formed into several packaging containers, or the packaging material is loaded to the filling machine as blanks. In the latter case a sleeve-formed tube is formed by each blank.

The next steps are filling and sealing. In the case of a packaging material in the form of a blank, the sleeve-formed tube is in one end sealed along a transverse seal zone and thereby filled with the liquid or semi-liquid food product. The still open end is then sealed along a transverse seal zone.

In the case of a web-based filling machine, like for instance the Tetra Fino ® Aseptic- type packaging machine the tube is continuously filled and sealed along transverse mutually apart seal zones to form cushion-shaped packaging containers. In this case the method further comprises the step of separating the packaging containers from the tube by incisions in the seal zones.

Each transverse seal is made such that the packaging material is folded around the fold line 16 in the seal zones 36. Further, the position of the opening devices in relation to the transverse sealing inductors are controlled such that an opening device is positioned on each package and preferably in one corner of the finished packaging container, see Figs. 2 and 8. A such position facilitates pouring from the packaging container.

It is apparent to a person skilled in the art that with the advancement of technology, the basic idea may be implemented in various ways. The invention and its embodiments are thus not limited to the examples described above; instead they may vary within the scope of the claims.

For example, in the Fig. 6 embodiment there are bridges 26, 28 cross the opening line 20 but no bridges cross the first fold line 16. Alternatively, the bridges 26, 28 cross the opening line 20 may be omitted, and bridges 30, 32 (as in the Fig. 4 embodiment) may be added.

A couple of examples of tab section designs have been shown in the embodiments, however, it is to be understood that the tab sections may be designed in many ways depending on the type of package the opening device is provided to and the amount of polymeric material that can be allowed for the opening device, typically 0,1-1 g.

## Claims

1. An opening device (10) comprising a packaging container (100) for liquid or semi-liquid food, said packaging container (100) having a first fold line (16) and an opening line (20), said first fold line (16) and opening line (20) intersect in an intersection point, said intersection point dividing the opening line into a first opening line portion (20a) and a second opening line portion (20b), wherein the opening device (10) comprises a first opening device portion (12) and a second opening device portion (14), wherein
the first opening device portion (12) has an opening edge (12a) that is aligned along the first opening line portion (20a) and arranged on a first side of the opening line (20),
the second opening device portion (14) has an opening edge (14a) that is aligned along the second opening line portion (20b) and arranged on a second side of the opening line (20), such that a consumer can fold the opening device (10) at the first fold line (16) and force the opening edges (12a, 14a) of the first and second opening device portions (12, 14) to act against each other to facilitate rupture of the packaging material along the opening line (20),
wherein the opening device (10) is made of a polymeric material and **characterized in that**
the opening device (10) is injection molded onto the packaging container before forming of the packaging container.

2. The opening device according to claim 1, wherein the first opening line portion (20a) is arranged to coincide with the second opening line portion (20b) when the opening device (10) is folded along the first fold line (16).

3. The opening device according to claim 1 or 2, wherein each of the first and second opening line portions (20a, 20b) is angled an angle (α) with respect to the first fold line (16).

4. The opening device according to any of the preceding claims, wherein the second opening line portion (20b) is a mirror of the first opening line portion (20a) around the first fold line (16).

5. The opening device according to any of the preceding claims, wherein
the first opening device portion (12) has a fold edge (12b) that is aligned along the first fold line (16) and arranged on a first side of the first fold line (16), and wherein
the second opening device portion (14) has a fold edge (14b) that is aligned along the first fold line (16) and arranged on a second side of the first fold line (16).

6. The opening device according to claim 5, wherein the fold edges (12b, 14b) are each arranged at a first distance from the first fold line (16), to allow the opening device (10) to be folded at the first fold line (16).

7. The opening device according to any of the preceding claims, wherein the opening edges (12a, 14a) are each arranged at a second distance from the opening line (20) to form an opening slot between them when the opening device (10) is folded at the first fold line (16).

8. The opening device according to any of the preceding claims, wherein the first opening device portion (12) comprises a tab section (34), and/or
wherein the second opening device portion (12) comprises a tab section (34).

9. A method of manufacturing an opening device according to any one of claims 1-8 said method comprises the steps of:
providing a packaging material comprising a bulk layer, which on a first side has a polymer layer,
injection moulding the opening device onto the first side of the packaging material, said opening device comprises a first opening device portion (12) and a second opening device portion (14), wherein the first opening device portion (12) is arranged on a first side of a first fold line (16) of the packaging container, and the second opening device portion (14) is arranged on a second side of the first fold line (16), thereby obtaining a packaging material comprising the opening device,
forming the packaging material into a tube by sealing overlapping longitudinal edges thereof,
filling the tube with a liquid or semi-liquid food product,
sealing the tube along transverse sealing zones (36) to form a cushion-shaped packaging container, said sealing being made such that the packaging material is folded around the first fold line (16) in the sealing zones (36), and such that the opening device is positioned in one corner of the packaging container.

10. The method according to claim 9, wherein the step of moulding comprises the steps of:
arranging, on the first side of the packaging material, a first mould portion comprising at least a first mould cavity,
arranging a second mould portion on the other side of the packaging material, positioned opposite the first mould portion,
injecting a plastic melt into the first mould cavity, and
removing the first and the second mould portions.

11. The method according to claim 9 or 10, wherein the packaging material is a web for forming more than one packaging container, and the step of sealing comprises sealing the tube along transverse mutually apart sealing zones to form cushion-shaped packaging containers, and the method further comprises the step of separating the packaging containers from the tube by incisions in the sealing zones.

## Patentansprüche

1. Öffnungsvorrichtung (10), umfassend einen Verpackungsbehälter (100) für flüssige oder halbflüssige Nahrungsmittel, wobei der Verpackungsbehälter (100) eine erste Faltlinie (16) und eine Öffnungslinie (20) aufweist, wobei sich die erste Faltlinie (16) und die Öffnungslinie (20) in einem Schnittpunkt schneiden, wobei der Schnittpunkt die Öffnungslinie in einen ersten Öffnungslinienabschnitt (20a) und einen zweiten Öffnungslinienabschnitt (20b) unterteilt, wobei die Öffnungsvorrichtung (10) einen ersten Öffnungsvorrichtungsabschnitt (12) und einen zweiten Öffnungsvorrichtungsabschnitt (14) umfasst, wobei
der erste Öffnungsvorrichtungsabschnitt (12) eine Öffnungskante (12a) aufweist, die entlang des ersten Öffnungslinienabschnitts (20a) ausgerichtet und auf einer ersten Seite der Öffnungslinie (20) angeordnet ist, der zweite Öffnungsvorrichtungsabschnitt (14) eine Öffnungskante (14a) aufweist, die entlang des zweiten Öffnungslinienabschnitts (20b) ausgerichtet und auf einer zweiten Seite der Öffnungslinie (20) angeordnet ist, sodass ein Verbraucher die Öffnungsvorrichtung (10) an der ersten Faltlinie (16) falten und die Öffnungskanten (12a, 14a) des ersten und des zweiten Öffnungsvorrichtungsabschnitts (12, 14) dazu zwingen kann, gegeneinander zu wirken, um einen Aufreißen des Verpackungsmaterials entlang der Öffnungslinie (20) zu ermöglichen,
wobei das Öffnungsvorrichtung (10) aus einem polymeren Material gefertigt ist, und **dadurch gekennzeichnet, dass** die Öffnungsvorrichtung (10) vor dem Formen des Verpackungsbehälters an den Verpackungsbehälter spritzgegossen wird.

2. Öffnungsvorrichtung nach Anspruch 1, wobei der erste Öffnungslinienabschnitt (20a) so angeordnet ist, dass er mit dem zweiten Öffnungslinienabschnitt (20b) deckungsgleich ist, wenn die Öffnungsvorrichtung (10) entlang der ersten Faltlinie (16) gefaltet ist.

3. Öffnungsvorrichtung nach Anspruch 1 oder 2, wobei sowohl der erste als auch der zweite Öffnungslinienabschnitt (20a, 20b) in einem Winkel (α) in Bezug auf die erste Faltlinie (16) angeordnet sind.

4. Öffnungsvorrichtung nach einem der vorangehenden Ansprüche, wobei der zweite Öffnungslinienabschnitt (20b) ein Spiegel des ersten Öffnungslinienabschnitts (20a) um die erste Faltlinie (16) ist.

5. Öffnungsvorrichtung nach einem der vorangehenden Ansprüche, wobei
der erste Öffnungsvorrichtungsabschnitt (12) eine Faltkante (12b) aufweist, die entlang der ersten Faltlinie (16) ausgerichtet und auf einer ersten Seite der ersten Faltlinie (16) angeordnet ist, und wobei
der zweite Öffnungsvorrichtungsabschnitt (14) eine Faltkante (14b) aufweist, die entlang der ersten Faltlinie (16) ausgerichtet und auf einer zweiten Seite der ersten Faltlinie (16) angeordnet ist.

6. Öffnungsvorrichtung nach Anspruch 5, wobei die Faltkanten (12b, 14b) jeweils in einem ersten Abstand von der ersten Faltlinie (16) angeordnet sind, um zu ermöglichen, dass die Öffnungsvorrichtung (10) an der ersten Faltlinie (16) gefaltet wird.

7. Öffnungsvorrichtung nach einem der vorangehenden Ansprüche, wobei die Öffnungskanten (12a, 14a) jeweils in einem zweiten Abstand von der Öffnungslinie (20) angeordnet sind, um einen Öffnungsschlitz zwischen ihnen zu formen, wenn die Öffnungsvorrichtung (10) an der ersten Faltlinie (16) gefaltet ist.

8. Öffnungsvorrichtung nach einem der vorangehenden Ansprüche, wobei der erste Öffnungsvorrichtungsabschnitt (12) einen Laschenabschnitt (34) umfasst und/oder
wobei der zweite Öffnungsvorrichtungsabschnitt (12) einen Laschenabschnitt (34) umfasst.

9. Verfahren zur Herstellung einer Öffnungsvorrichtung nach einem der vorangehenden Ansprüche 1 - 8, wobei das Verfahren die folgenden Schritte umfasst:
Bereitstellen eines Verpackungsmaterials, das eine Bulkschicht umfasst und auf einer ersten Seite eine Polymerschicht aufweist, Spritzgießen der Öffnungsvorrichtung auf die erste Seite des Verpackungsmaterials, wobei die Öffnungsvorrichtung einen ersten Öffnungsvorrichtungsabschnitt (12) und
einen zweiten Öffnungsvorrichtungsabschnitt (14) umfasst,
wobei der erste Öffnungsvorrichtungsabschnitt (12) auf einer ersten Seite einer ersten Faltlinie (16) des Verpackungsbehälters angeordnet ist und der zweite Öffnungsvorrichtungsabschnitt (14) auf einer zweiten Seite der erste Faltlinie (16) angeordnet ist, wodurch ein Verpackungsmaterial erhalten wird, das die Öffnungsvorrichtung umfasst,
Formen des Verpackungsmaterials zu einem Schlauch durch Abdichten überlappender Längskanten desselben,
Füllen des Schlauchs mit einem flüssigen oder halbflüssigen Nahrungsmittelprodukt,
Abdichten des Schlauchs entlang von Querabdichtungszonen (36), um einen kissenförmigen Verpackungsbehälter zu formen, wobei das Abdichten so erfolgen kann, dass das Verpackungsmaterial um die erste Faltlinie (16) in der Abdichtungszone (36) gefaltet wird,
und so, dass die Öffnungsvorrichtung in der Ecke des Verpackungsbehälters positioniert ist.

10. Verfahren nach Anspruch 9, wobei der Schritt des Gießens die folgenden Schritte umfasst:
Anordnen eines ersten Formabschnitts, der zumindest einen ersten Formhohlraum umfasst, auf einer ersten Seite des Verpackungsmaterials,
Anordnen eines zweiten Formabschnitts auf der anderen Seite des Verpackungsmaterials, die gegenüber dem ersten Formabschnitt positioniert ist,
Einspritzen einer Kunststoffschmelze in den ersten Formhohlraum und Entfernen des ersten und des zweiten Formabschnitts.

11. Verfahren nach Anspruch 9 oder 10, wobei das Verpackungsmaterial eine Bahn zum Formen von mehr als einem Verpackungsbehälter ist und wobei der Schritt des Abdichtens das Abdichten des Schlauchs entlang von quer voneinander getrennten Abdichtungszonen umfasst, um kissenförmige Verpackungsbehälter zu formen, und wobei das Verfahren ferner den Schritt des Trennens der Verpackungsbehälter vom Schlauch durch Schnitte in den Abdichtungszonen umfasst.

## Revendications

1. Dispositif d'ouverture (10) comprenant un contenant d'emballage (100) pour des aliments liquides ou semi-liquides, ledit contenant d'emballage (100) ayant une première ligne de pliage (16) et une ligne d'ouverture (20), ladite première ligne de pliage (16) et ladite ligne d'ouverture (20) se croisant en un point d'intersection, ledit point d'intersection divisant la ligne d'ouverture en une première partie de ligne d'ouverture (20a) et une seconde partie de ligne d'ouverture (20b), le dispositif d'ouverture (10) comprenant une première partie de dispositif d'ouverture (12) et une seconde partie de dispositif d'ouverture (14),
la première partie de dispositif d'ouverture (12) ayant un bord d'ouverture (12a) qui est aligné le long de la première partie de ligne d'ouverture (20a) et disposé sur un premier côté de la ligne d'ouverture (20),
la seconde partie de dispositif d'ouverture (14) ayant un bord d'ouverture (14a) qui est aligné le long de la seconde partie de ligne d'ouverture (20b) et disposé sur un second côté de la ligne d'ouverture (20), de sorte qu'un consommateur puisse plier le dispositif d'ouverture (10) au niveau de la première ligne de pliage (16) et forcer les bords d'ouverture (12a, 14a) des première et seconde parties de dispositif d'ouverture (12, 14) à agir l'une contre l'autre pour faciliter la rupture du matériau d'emballage le long de la ligne d'ouverture (20),
le dispositif d'ouverture (10) étant en un matériau polymère et **caractérisé en ce que**
le dispositif d'ouverture (10) est moulé par injection sur le contenant d'emballage avant la formation du contenant d'emballage.

2. Dispositif d'ouverture selon la revendication 1, la première partie de ligne d'ouverture (20a) étant disposée pour coïncider avec la seconde partie de ligne d'ouverture (20b) lorsque le dispositif d'ouverture (10) est plié le long de la première ligne de pliage (16).

3. Dispositif d'ouverture selon la revendication 1 ou 2, chacune des première et seconde parties de ligne d'ouverture (20a, 20b) étant inclinée à un angle (α) par rapport à la première ligne de pliage (16).

4. Dispositif d'ouverture selon l'une quelconque des revendications précédentes, la seconde partie de ligne d'ouverture (20b) étant un miroir de la première partie de ligne d'ouverture (20a) autour de la première ligne de pliage (16).

5. Dispositif d'ouverture selon l'une quelconque des revendications précédentes,
la première partie de dispositif d'ouverture (12) ayant un bord de pliage (12b) qui est aligné le long de la première ligne de pliage (16) et disposé sur un premier côté de la première ligne de pliage (16), et
la seconde partie de dispositif d'ouverture (14) ayant un bord de pliage (14b) qui est aligné le long de la première ligne de pliage (16) et disposé sur un second côté de la première ligne de pliage (16).

6. Dispositif d'ouverture selon la revendication 5, les bords de pliage (12b, 14b) étant chacun disposés à une première distance de la première ligne de pliage (16), pour permettre au dispositif d'ouverture (10) d'être plié au niveau de la première ligne de pliage (16).

7. Dispositif d'ouverture selon l'une quelconque des revendications précédentes, les bords d'ouverture (12a, 14a) étant chacun disposés à une seconde distance de la ligne d'ouverture (20) pour former une fente d'ouverture entre eux lorsque le dispositif d'ouverture (10) est plié au niveau de la première ligne de pliage (16).

8. Dispositif d'ouverture selon l'une quelconque des revendications précédentes, la première partie de dispositif d'ouverture (12) comprenant une section de languette (34), et/ou
la seconde partie de dispositif d'ouverture (12) comprenant une section de languette (34).

9. Procédé de fabrication d'un dispositif d'ouverture selon l'une quelconque des revendications 1 à 8, ledit procédé comprenant les étapes consistant à :
fournir un matériau d'emballage comprenant une couche massive, qui sur un premier côté a une couche de polymère,
mouler par injection le dispositif d'ouverture sur le premier côté du matériau d'emballage, ledit dispositif d'ouverture comprenant une première partie de dispositif d'ouverture (12) et une seconde partie de dispositif d'ouverture (14), la première partie de dispositif d'ouverture (12) étant disposée sur un premier côté d'une première ligne de pliage (16) du contenant d'emballage, et la seconde partie de dispositif d'ouverture (14) étant disposée sur un second côté de la première ligne de pliage (16), obtenant ainsi un matériau d'emballage comprenant le dispositif d'ouverture,
former le matériau d'emballage en un tube en scellant ses bords longitudinaux qui se chevauchent,
remplir le tube avec un produit alimentaire liquide ou semi-liquide,
sceller le tube le long de zones de scellage transversales (36) pour former un contenant d'emballage en forme de coussin, ledit scellage étant réalisé de sorte que le matériau d'emballage soit plié autour de la première ligne de pliage (16) dans les zones de scellage (36), et de sorte que le dispositif d'ouverture soit positionné dans un coin du contenant d'emballage.

10. Procédé selon la revendication 9, l'étape de moulage comprenant les étapes consistant à :
disposer, sur le premier côté du matériau d'emballage, une première partie de moule comprenant au moins une première cavité de moule,
disposer une seconde partie de moule sur l'autre côté du matériau d'emballage, positionnée à l'opposé de la première partie de moule,
injecter un plastique fondu dans la première cavité de moule, et
retirer la première et la seconde partie de moule.

11. Procédé selon la revendication 9 ou 10, le matériau d'emballage étant une bande pour former plus d'un contenant d'emballage, et l'étape de scellage comprenant l'étape consistant à sceller le tube le long de zones de scellage transversales mutuellement espacées pour former des contenants d'emballage en forme de coussin, et le procédé comprenant en outre l'étape consistant à séparer les contenants d'emballage du tube par des incisions dans les zones de scellage.
